(19) Europäisches Patentamt
European Patent Office
Office européen des brevets

(11) **EP 3 531 642 B1**

(12) **EUROPEAN PATENT SPECIFICATION**

(45) Date of publication and mention
of the grant of the patent:
**01.12.2021 Bulletin 2021/48**

(21) Application number: **16923454.9**

(22) Date of filing: **05.12.2016**

(51) Int Cl.:
**H04L 25/49** (2006.01)   **H04W 92/12** (2009.01)

(86) International application number:
**PCT/CN2016/108613**

(87) International publication number:
**WO 2018/102972 (14.06.2018 Gazette 2018/24)**

(54) **DATA TRANSMISSION METHOD, APPARATUS AND SYSTEM**

DATENÜBERTRAGUNGSVERFAHREN, -VORRICHTUNG UND -SYSTEM

PROCÉDÉ, APPAREIL ET SYSTÈME DE TRANSMISSION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.08.2019 Bulletin 2019/35**

(73) Proprietor: **Huawei Technologies Co., Ltd.
Longgang District
Shenzhen, Guangdong 518129 (CN)**

(72) Inventors:
• **CAI, Meng
Shenzhen
Guangdong 518129 (CN)**
• **LI, Kun
Shenzhen
Guangdong 518129 (CN)**

(74) Representative: **Pfenning, Meinig & Partner mbB
Patent- und Rechtsanwälte
Joachimsthaler Straße 10-12
10719 Berlin (DE)**

(56) References cited:
WO-A1-2014/111223   CN-A- 102 037 694
CN-A- 102 843 720   US-A1- 2013 166 766
US-A1- 2015 094 055

• LIANG LIU ET AL: "Optimized Uplink
Transmission in Multi-Antenna C-RAN With
Spatial Compression and Forward", IEEE
TRANSACTIONS ON SIGNAL PROCESSING., vol.
63, no. 19, 28 April 2015 (2015-04-28), pages
5083-5095, XP055376484, US ISSN: 1053-587X,
DOI: 10.1109/TSP.2015.2450199
• CHOI JINSEOK ET AL: "Space-time fronthaul
compression of complex baseband uplink LTE
signals", 2016 IEEE INTERNATIONAL
CONFERENCE ON COMMUNICATIONS (ICC),
IEEE, 22 May 2016 (2016-05-22), pages 1-6,
XP032922440, DOI: 10.1109/ICC.2016.7511265
[retrieved on 2016-07-12]

**Description**

**TECHNICAL FIELD**

This application relates to the field of communications technologies, and in particular, to a data transmission method, an apparatus, and a system.

**BACKGROUND**

In a mobile communications system, a C-RAN (Cloud Radio Access Network, cloud radio access network) system has become a technology that attracts prevalent attention, and is a larger-scale radio access system that applies a cloud computing technology. In a C-RAN, BBUs (Baseband Unit, baseband unit) of a plurality of base stations are centralized by using an optical fiber or an optical transport network, and RRUs (Radio Remote Unit, radio remote unit) are remotely deployed to perform signal coverage. Compared with a conventional deployment manner, this deployment manner can reduce site deployment costs, save energy, facilitate maintenance, and improve spectrum efficiency of joint transmission. However, because the RRU is far away from the BBU, large transmission bandwidth of a CPRI (Common Public Radio Interface, common public radio interface) interface deployed between the BBU and the RRU is required. Especially, with continuous evolution of the communications system and appearance of a multiple-antenna technology, an amount of data transmitted between the BBU and the RRU is increasingly large, thereby consuming considerable transmission resources and increasing hardware costs. US2013/166766 A1 describes a streaming service for correlated multi-streaming where multiple input devices at a source location capture data to be streamed to one or more destination locations. The captured data is provided to a streaming interface of the streaming service that encapsulates the captured data in streaming packets. The streaming interface provides the streaming packets to a streaming gateway of the streaming service that processes the streaming packets and transmits the streaming packets to a streaming gateway at the destination location.

The streaming gateways manage the correlated streaming of the multiple data streams. Various processing of the data streams can be performed by the streaming gateways, including various user-defined and system-defined processing.

LIANG LIU ET AL, "Optimized Uplink Transmission in Multi-Antenna C-RAN With Spatial Compression and Forward", IEEE TRANSACTIONS ON SIGNAL PROCESSING., US, (20150428), vol. 63, no. 19, pages 5083-5095, and CHOI JINSEOK ET AL, "Space-time fronthaul compression of complex baseband uplink LTE signals", 2016 IEEE INTERNATIONAL CONFERENCE ON COMMUNICATIONS (ICC), IEEE, (20160522), pages 1-6, are further useful for understanding the background of the present invention.

In view of the above, an effective data transmission method is currently required to effectively reduce an amount of data transmitted between a BBU and an RRU.

**SUMMARY**

The invention presented in this application provides data transmission methods, a transmit end device, a receive end device, and a system according to the independent claims, to resolve a technical problem that an amount of data transmitted between a BBU and an RRU is large.

One of the data transmission methods particularly includes the method steps as defined by claim 1.

In this way, because transmission bandwidth required after a data stream in the first-type cluster is compressed in the first compression manner is less than transmission bandwidth required after the data stream in the first-type cluster is compressed in the second compression manner, the data stream in the first-type cluster is compressed in the first compression manner, and a data stream in the second-type cluster is compressed in the second compression manner, thereby effectively improving compression efficiency and reducing an amount of data for signal transmission between the transmit end device and the receive end device.

Optionally, the grouping the m I/Q data streams into a plurality of clusters, where at least one of the plurality of clusters is a first-type cluster includes:

grouping, by the transmit end device, the m I/Q data streams into p clusters based on the correlation between the m I/Q data streams, where the p clusters include p—1 clusters meeting a second preset condition, and the second preset condition is that a correlation between a data stream other than a target data stream in a cluster and the target data stream is greater than or equal to a first threshold, where p is a positive integer greater than 1; and
determining, by the transmit end device, a cluster that meets the first preset condition in the p-1 clusters meeting the second preset condition as the first-type cluster.

In this case, a correlation between data streams affects compression efficiency of the data streams. For example, for space-time compression, in a high spatial correlation scenario, a spatial compression gain can be implemented by using an algorithm such as PCA, so that relatively high compression efficiency is achieved by adding the spatial compression gain to a temporal compression gain. Therefore, the data streams are preliminarily grouped based on the correlation between the m I/Q data streams to group correlated data streams into one cluster, thereby providing a basis for subsequently using different compression manners based on the correlation between the data streams. Further, the first-type cluster and the second-type cluster are determined by determining whether a cluster obtained through preliminary grouping meets the first preset condition, to further implement accurate grouping.

Optionally, the transmit end device determines, in the following manner, that the cluster meeting the second preset condition meets the first preset condition:

determining, by the transmit end device, whether an average of correlations between the target data stream and data streams other than the target data stream in any cluster of the p-1 clusters meeting the second preset condition is greater than a second threshold, and if yes, determining that the any cluster meets the first preset condition, where the second threshold is greater than the first threshold.

In this way, after the data streams are preliminarily grouped to group correlated data streams into one cluster, it is determined whether the average of the correlations between the target data stream and the data streams other than the target data stream in the cluster is greater than the second threshold, so that a cluster corresponding to a relatively large correlation average, namely, a cluster including highly correlated data streams, is determined from the plurality of clusters, thereby pertinently performing space-time compression on the clusters to improve compression efficiency. In addition, preliminary grouping is performed based on the correlation between the data streams.

Therefore, based on the preliminary grouping, it is simpler and more convenient to calculate the average of the correlations between the target data stream and the data streams other than the target data stream in the cluster, so that processing resources can be effectively saved.

Optionally, the transmit end device determines, in the following manner, that the cluster meeting the second preset condition meets the first preset condition:

separately compressing, by the transmit end device in the first compression manner and the second compression manner, any cluster of the p-1 clusters meeting the second preset condition; and

determining, by the transmit end device, whether transmission bandwidth required after a data stream in the any cluster is compressed in the first compression manner is less than transmission bandwidth required after the data stream in the any cluster is compressed in the second compression manner, and if yes, determining that the any cluster meets the first preset condition.

In this way, after the data streams are preliminarily grouped to group correlated data streams into one cluster, each cluster is compressed separately in the first compression manner and the second compression manner, and it is determined whether the cluster is a first-type cluster or a second-type cluster by comparing transmission bandwidth required after compression is performed in the two compression manners, so that a result of the determining can be more accurate and compression efficiency can be more effectively improved.

Optionally, the first compression manner is space-time compression, and the second compression manner is efficient wireless fronthaul EWF compression.

Optionally, the combining, by the transmit end device, a cluster obtained after each first-type cluster is compressed in the first compression manner and a cluster obtained after each second-type cluster is compressed in the second compression manner includes:

adding, by the transmit end device, a first-type preamble to each cluster compressed in the first compression manner, and adding a second-type preamble to each cluster compressed in the second compression manner; and

combining, by the transmit end device, the cluster to which the first-type preamble is added and the cluster to which the second-type preamble is added.

In this way, for a cluster compressed in the first compression manner, the transmit end device may allocate one first-type preamble to each cluster compressed in the first compression manner, and add the first-type preamble to a front end of each cluster compressed in the first compression manner. The first-type preamble is used by the receive end device to distinguish each cluster compressed in the first compression manner, to decompress each cluster compressed in the first compression manner. Therefore, first-type preambles allocated by the transmit end device to all clusters compressed in the first compression manner may be the same or may be different, and this is not specifically limited. For a cluster compressed in the second compression manner, the transmit end device may combine clusters compressed in the second compression manner into one cluster, and allocate one second-type preamble to the combined cluster. The second-type preamble is used by the receive end device to distinguish a cluster compressed in the second compression manner, to decompress the cluster compressed in the second compression manner.

Optionally, after the separating, by a transmit end device, m to-be-sent CPRI data streams, the method further includes: obtaining a control word CW data stream; and

the combining, by the transmit end device, the cluster to which the first-type preamble is added and the cluster to which the second-type preamble is added includes:
combining, by the transmit end device, the cluster to which the first-type preamble is added, the cluster to which the second-type preamble is added, and the CW data stream.

Optionally, the combining, by the transmit end device, the cluster to which the first-type preamble is added, the cluster to which the second-type preamble is added, and the CW data stream includes:
performing, by the transmit end device, time division multiplexing TDM or frequency division multiplexing FDM combination on the cluster to which the first-type preamble is added, the cluster to which the second-type preamble is added, and the CW data stream.

One other data reception method includes the method steps as defined by claim 9.

In this way, because transmission bandwidth required after a data stream in the first-type cluster is compressed in the first compression manner is less than transmission bandwidth required after the data stream in the first-type cluster is compressed in the second compression manner, the data stream in the first-type cluster is compressed in the first compression manner, and a data stream in the second-type cluster is compressed in the second compression manner, thereby effectively improving compression efficiency and reducing an amount of data for signal transmission between the transmit end device and the receive end device.

Because a combined data stream sent by the transmit end device is obtained through compression in different compression manners, after receiving the combined data stream, the receive end device may identify, through splitting, a data stream compressed in the different compression manners, to perform decompression based on the different compression manners, thereby completing receiving while improving compression efficiency.

Optionally, the splitting, by the receive end device, the received data stream to obtain a cluster compressed in a first compression manner and a cluster compressed in a second compression manner includes:

splitting, by the receive end device, the received data stream to obtain a plurality of clusters; and
if determining that any cluster of the plurality of clusters includes a first-type preamble, determining, by the receive end device, that the any cluster is the cluster compressed in the first compression manner, and if determining that the any cluster includes a second-type preamble, determining that the any cluster is the cluster compressed in the second compression manner.

Optionally, after the splitting, by the receive end device, the received data stream, the method further includes: obtaining a CW data stream; and
the combining, by the receive end device, the decompressed data stream according to the CPRI protocol includes:
combining, by the receive end device, the decompressed data stream and the CW data stream according to the CPRI protocol.

Optionally, the first compression manner is space-time compression, and the second compression manner is EWF compression.

The transmit end device provided by the invention is defined by claim 13.

Optionally, the processor is specifically configured to:

group the m I/Q data streams into p clusters based on the correlation between the m I/Q data streams, where the p clusters include p—1 clusters meeting a second preset condition, and the second preset condition is that a correlation between a data stream other than a target data stream in a cluster and the target data stream is greater than or equal to a first threshold, where p is a positive integer greater than 1; and
determine a cluster that meets the first preset condition in the p-1 clusters meeting the second preset condition as the first-type cluster.

Optionally, the processor is specifically configured to determine, in the following manner, that the cluster meeting the second preset condition meets the first preset condition:

determining whether an average of correlations between the target data stream and data streams other than the target data stream in any cluster of the p—1 clusters meeting the second preset condition is greater than a second threshold, and if yes,
determining that the any cluster meets the first preset condition, where the second threshold is greater than the first threshold.

Optionally, the processor is specifically configured to determine, in the following manner, that the cluster meeting the second preset condition meets the first preset condition:

separately compressing, in the first compression manner and the second compression manner, any cluster of the p-1 clusters meeting the second preset condition; and
determining whether transmission bandwidth required after a data stream in the any cluster is compressed in the first compression manner is less than transmission bandwidth required after the data stream in the any cluster is compressed in the second compression manner, and if yes, determining that the any cluster meets the first preset condition.

Optionally, the first compression manner is space-time compression, and the second compression manner is efficient wireless fronthaul EWF compression.

Optionally, the processor is specifically configured to:

add a first-type preamble to each cluster compressed in the first compression manner, and add a second-type preamble to each cluster compressed in the second compression manner; and
combine the cluster to which the first-type preamble is added and the cluster to which the second-type preamble is added.

Optionally, after separating the m to-be-sent CPRI data streams, the processor is further configured to:

obtain a control word CW data stream; and
combine the cluster to which the first-type preamble is added, the cluster to which the second-type preamble is added, and the CW data stream.

Optionally, the processor is specifically configured to:
perform time division multiplexing TDM or frequency division multiplexing FDM combination on the cluster to which the first-type preamble is added, the cluster to which the second-type preamble is added, and the CW data stream.
The receive end device provided by the invention is defined by claim 14.
Optionally, the processor is specifically configured to:

split the received data stream to obtain a plurality of clusters; and
if determining that any cluster of the plurality of clusters includes a first-type preamble, determine that the any cluster is the cluster compressed in the first compression manner, and if determining that the any cluster includes a second-type preamble, determine that the any cluster is the cluster compressed in the second compression manner.

Optionally, after splitting the received data stream, the processor is further configured to:

obtain a CW data stream; and
combine the decompressed data stream and the CW data stream according to the CPRI protocol.

Optionally, the first compression manner is space-time compression, and the second compression manner is EWF compression.
In a possible implementation, this application provides a data sending and receiving system, as defined by claim 15.
In this application, the transmit end device separates the m to-be-sent CPRI data streams to obtain the m I/Q data streams, and groups the m I/Q data streams into the plurality of clusters, where the at least one of the plurality of clusters is the first-type cluster; and the transmit end device combines the cluster obtained after the first-type cluster is compressed in the first compression manner and the cluster obtained after the second-type cluster is compressed in the second compression manner, and sends the combined data stream to the receive end device, where the second-type cluster is a cluster in the plurality of clusters except the first-type cluster. In this application, because transmission bandwidth required after a data stream in the first-type cluster is compressed in the first compression manner is less than transmission bandwidth required after the data stream in the first-type cluster is compressed in the second compression manner, the data stream in the first-type cluster is compressed in the first compression manner, and a data stream in the second-type cluster is compressed in the second compression manner, thereby effectively improving compression efficiency and reducing an amount of data for signal transmission between the transmit end device and the receive end device.

## BRIEF DESCRIPTION OF DRAWINGS

To describe the technical solutions in this application more clearly, the following briefly describes the accompanying drawings required for describing the embodiments.

FIG. 1 is a schematic diagram of a system architecture to which this application is applied;
FIG. 2A and FIG. 2B are a schematic flowchart corresponding to a data transmission method according to this application;
FIG. 3 is a schematic flowchart of a first data sending method according to this application;
FIG. 4 is a schematic flowchart of a second data sending method according to this application;
FIG. 5 is a schematic flowchart of a data receiving method according to this application;
FIG. 6 is an example diagram of spectrum efficiency in different compression manners;
FIG. 7 is a schematic structural diagram of a transmit end device according to this application;
FIG. 8 is a schematic structural diagram of a receive end device according to this application;
FIG. 9 is a schematic structural diagram of another transmit end device according to this application; and
FIG. 10 is a schematic structural diagram of another receive end device according to this application.

## DESCRIPTION OF EMBODIMENTS

The following further describes in detail this application with reference to accompanying drawings.

This application provides a data transmission method, to effectively improve compression efficiency and reduce an amount of data for signal transmission between a transmit end device and a receive end device.

The method provided in this application may be applied to a base station including an RRU and a BBU. The base station is an apparatus that is deployed in a radio access network to provide a wireless communication function. For example, a device that provides a base station function in a 2G network includes a base transceiver station (base transceiver station, BTS) and a base station controller (base station controller, BSC), a device that provides a base station function in a 3G network includes a NodeB (NodeB) and a radio network controller (radio network controller, RNC), a device that provides a base station function in a 4G network includes an evolved NodeB (evolved NodeB, eNB), and a device that provides a base station function in a 5G network includes a new radio NodeB (New Radio NodeB, gNB), a centralized unit (Centralized Unit, CU), a distributed unit (Distributed Unit), and a new radio controller.

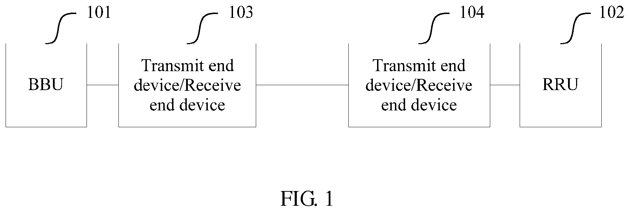

FIG. 1 is a schematic diagram of a system architecture to which this application is applied. The system architecture may include one BBU 101 and one or more RRUs that communicate with the BBU, such as an RRU 102 shown in FIG. 1. The system architecture further includes a transmit end device/receive end device 103 on the BBU 101 side and a transmit end device/receive end device 104 on the RRU 102.

The transmit end device/receive end device 103 may be a separate hardware device, and is connected to the BBU 101 through a CPRI interface. The two devices may transmit data through the CPRI interface. Alternatively, the transmit end device/receive end device 103 may be integrated with the BBU 101. Similarly, the transmit end device/receive end device 104 may be a separate hardware device, and is connected to the RRU 102 through a CPRI interface. The two devices may transmit data through the CPRI interface. Alternatively, the transmit end device/receive end device 104 may be integrated with the RRU 102.

Because the BBU 101 and the RRU 102 may communicate with each other, if the transmit end device/receive end device 103 is a transmit end device, correspondingly, the transmit end device/receive end device 104 is a receive end device; if the transmit end device/receive end device 103 is a receive end device, correspondingly, the transmit end device/receive end device 104 is a transmit end device.

Communications systems to which the system architecture is applied include but are not limited to: Code Division Multiple Access (Code Division Multiple Access, CDMA) IS-95, Code Division Multiple Access (Code Division Multiple Access, CDMA) 2000, Time Division-Synchronous Code Division Multiple Access (Time Division-Synchronous Code Division Multiple Access, TD-SCDMA), Wideband Code Division Multiple Access (Wideband Code Division Multiple Access, WCDMA), Time Division Duplex-Long Term Evolution (Time Division Duplexing-Long Term Evolution, TDD LTE), Frequency Division Duplex-Long Term Evolution (Frequency Division Duplexing-Long Term Evolution, FDD LTE), Long Term Evolution-Advanced (Long Term Evolution-Advanced, LTE-advanced), and various evolved wireless communications systems in the future (for example, a 5G system).

Some technical solutions in this application may be specifically implemented based on the system architecture shown in the example in FIG. 1 or a variant of the system architecture.

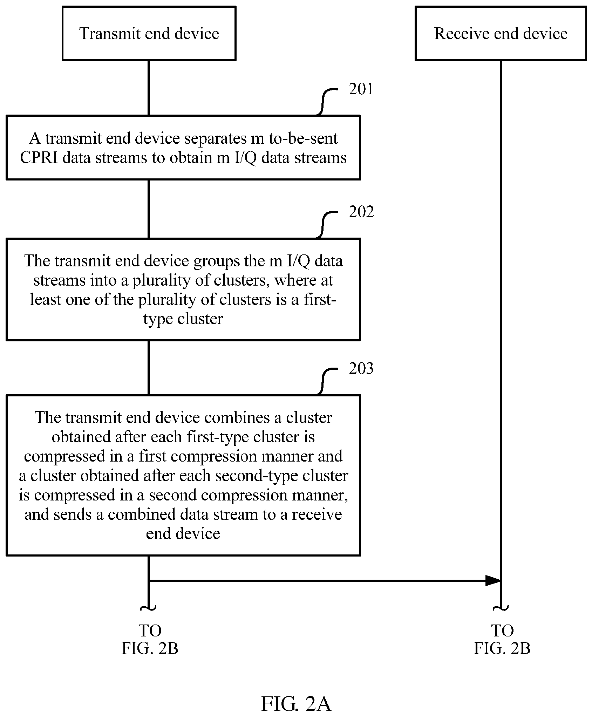

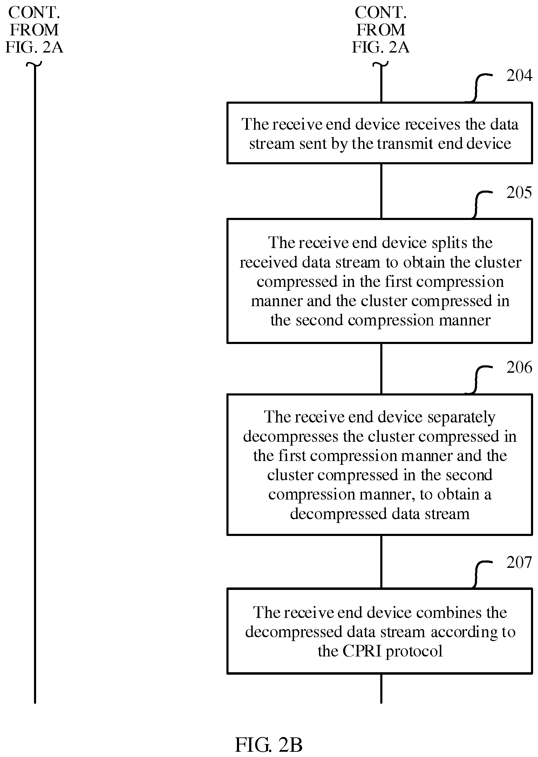

FIG. 2A and FIG. 2B are a schematic flowchart corresponding to a data transmission method according to this application. As shown in FIG. 2A and FIG. 2B, the method includes the following steps:

Step 201: A transmit end device separates m to-be-sent CPRI data streams to obtain m I/Q data streams.

Step 202: The transmit end device groups the m I/Q data streams into a plurality of clusters based on a correlation between the m I/Q data streams, where at least one of the plurality of clusters is a first-type cluster, the first-type cluster meets a first preset condition, and the first preset condition is that transmission bandwidth required after a data stream in a cluster is compressed in a first compression manner is less than transmission bandwidth required after the data stream in the cluster is compressed in a second compression manner.

Step 203: The transmit end device combines a cluster obtained after each first-type cluster is compressed in the first compression manner and a cluster obtained after each second-type cluster is compressed in the second compression manner, and sends a combined data stream to a receive end device, where the second-type cluster is a cluster in the plurality of clusters except the first-type cluster.

Step 204: The receive end device receives the data stream sent by the transmit end device.

Step 205: The receive end device splits the received data stream to obtain the cluster compressed in the first compression manner and the cluster compressed in the second compression manner.

Step 206: The receive end device separately decompresses the cluster compressed in the first compression manner and the cluster compressed in the second compression manner, to obtain a decompressed data stream.

Step 207: The receive end device combines the decompressed data stream according to the CPRI protocol.

In this application, because transmission bandwidth required after a data stream in the first-type cluster is compressed in the first compression manner is less than transmission bandwidth required after the data stream in the first-type cluster is compressed in the second compression manner, the data stream in the first-type cluster is compressed in the first compression manner, and a data stream in the second-type cluster is compressed in the second compression manner, thereby effectively improving compression efficiency and reducing an amount of data for signal transmission between the transmit end device and the receive end device.

In this application, the first compression manner may be space-time compression, and the second compression manner may be EWF compression. Specifically, space-time compression is compression processing performed on a signal through spatial compression and temporal compression. A compression rate can be increased by three to four times through temporal digital compression. With the advent of the 5G era, technologies such as Massive MIMO (Massive Multiple-Input Multiple-Output, massive multiple-input multiple-output) and beamforming are gradually popularized, and a spatial correlation of an I/Q (in-phase and quadrature, in-phase and quadrature) data stream is enhanced. In a high spatial correlation scenario, a spatial compression gain can be implemented by using an algorithm such as PCA (Principal Component Analysis, principal component analysis), so that relatively high compression efficiency can be implemented by adding the spatial compression gain to a temporal compression gain.

EWF compression is to perform transmission based on wireless analog bandwidth to ensure wireless end-to-end performance. Theoretically, a compression ratio can be increased by 5 to 10 times through EWF compression.

In step 201, the transmit end device may be a device on the BBU 101 side. In this case, the m to-be-sent CPRI data streams are CPRI data streams that are obtained by the transmit end device from the BBU 101 and that need to be sent to the RRU 102.

Alternatively, the transmit end device may be a device on the RRU 102 side. In this case, the m to-be-sent CPRI data streams are CPRI data streams that are obtained by the transmit end device from the RRU 102 and that need to be sent to the BBU 101.

The transmit end device separates the m to-be-sent CPRI data streams to obtain the m I/Q data streams and a CW data stream.

In step 202, for the m I/Q data streams, the transmit end device groups the m I/Q data streams into p clusters based on the correlation between the m I/Q data streams. The p clusters include p—1 clusters meeting the second preset condition, and the second preset condition is that a correlation between a data stream other than a target data stream in the cluster and the target data stream is greater than or equal to a first threshold, where p is a positive integer greater than 1. The first threshold is a basis for preliminarily grouping data streams and is usually set to a relatively small value. A specific value may be set by persons skilled in the art according to experience.

The correlation between the data streams may be a spatial correlation between the data streams. The correlation between the data streams may be calculated in a plurality of manners. For example, the correlation between the data streams may be calculated by using a Pearson correlation coefficient:

$$\rho_{x,y} = \frac{\mathrm{cov}(x,\, y)}{\sigma_x \sigma_y}$$　………………………… (Formula 1)

In the formula, $\rho_{x,y}$ represents a correlation between a data stream x and a data stream y that ranges from 0 to 1, cov($x$, $y$) represents a covariance between the data stream x and the data stream y, $\sigma_x$ represents a standard

deviation of the data stream x, and $\sigma_y$ represents a standard deviation of the data stream y.

For example, if m=10, the m I/Q data streams are data streams i1, i2, i3, ..., and i10. The transmit end device may randomly select one of the ten data streams (for example, the data stream i1) as a reference data stream, calculate a correlation between each of the remaining nine data streams and the data stream i1, and determine a data stream (for example, the data stream i2 or the data stream i3) whose correlation with the data stream i1 is greater than or equal to the first threshold. In this case, the transmit end device may group the data streams i1, i2, and i3 into a cluster a. Subsequently, the transmit end device randomly selects one of the remaining seven data streams (for example, the data stream i4) as a reference data stream, calculates a correlation between each of the remaining six data streams and the data stream i4, and determines a data stream (for example, the data stream i5, the data stream i6, or the data stream i7) whose correlation with the data stream i4 is greater than or equal to the first threshold. In this case, the transmit end device may group the data streams i4, i5, i6, and i7 into a cluster b. The transmit end device groups the remaining three data streams in a same manner. If determining that a correlation among the three data streams is less than the first threshold, the transmit end device may group the remaining three data streams into a cluster c, to complete grouping of the m I/Q data streams.

It can be learned from the foregoing grouping that, a correlation between a data stream in the cluster except the data stream i1 a and the data stream i1 is greater than or equal to the first threshold, and a correlation between a data stream in the cluster b except the data stream i4 and the data stream i4 is greater than or equal to the first threshold. Therefore, the clusters a and b are clusters meeting the second preset condition, and the cluster c is a cluster that does not meet the second preset condition. Further, the transmit end device determines a cluster that meets the first preset condition in the p-1 clusters meeting the second preset condition as the first-type cluster, and determines a cluster in the p clusters except the first-type cluster as the second-type cluster.

Specifically, the transmit end device may determine, in a plurality of manners, whether the cluster meeting the second preset condition meets the first preset condition. In this application, only the following manners 1 and 2 are used as examples for description.

Manner 1

The transmit end device determines whether an average of correlations between the target data stream and data streams other than the target data stream in any cluster of the p-1 clusters meeting the second preset condition is greater than a second threshold, and if yes, determines that the any cluster meets the first preset condition; otherwise, determines that the any cluster does not meet the first preset condition. The second threshold is greater than the first threshold. For example, the first threshold may be 0.1, and the second threshold may be 0.3.

It should be noted that, a quantity of data streams included in a cluster varies.

Therefore, the average of the correlations between the target data stream and the data streams other than the target data stream in the any cluster varies as a quantity of data streams included in the any cluster varies. Based on this, in this application, the second threshold may be set based on the quantity of data streams included in the cluster, that is, a set of second thresholds {a2, a3, ..., ap} may be set, where a2 is a corresponding second threshold when the quantity of data streams included in the cluster is 2, a3 is a corresponding second threshold when the quantity of data streams included in the cluster is 3, and by analogy, ap is a corresponding second threshold when the quantity of data streams included in the cluster is p. Correspondingly, when determining whether the any cluster meeting the second preset condition meets the first preset condition, the transmit end device needs to determine whether the average of the correlations between the target data stream and the data streams other than the target data stream in the any cluster is greater than the second threshold corresponding to the any cluster, and if yes, determines that the any cluster meets the first preset condition. The second threshold corresponding to the any cluster is a second threshold corresponding to the quantity of data streams included in the any cluster, and if the quantity of data streams in the any cluster is p, the second threshold corresponding to the any cluster is ap.

In this application, the second threshold may be set by persons skilled in the art according to experience and an actual situation. Alternatively, the second threshold may be obtained through offline training.

That the second threshold is obtained through offline training is specifically described below. For any second threshold (for example, ap) in the foregoing set of second thresholds, space-time compression and EWF compression may be separately performed on a plurality of clusters (a cluster m1, a cluster m2, and a cluster m3) meeting the second preset condition, and transmission bandwidth required after the space-time compression and the EWF compression are performed on the cluster m1, the cluster m2, and the cluster m3 is separately compared. If a result of the comparison is: for the cluster m1, transmission bandwidth required after the space-time compression is greater than transmission bandwidth required after the EWF compression, for the cluster m2, transmission bandwidth required after the space-time compression is less than transmission bandwidth required after the EWF compression, and for the cluster m3, transmission bandwidth required after the space-time compression is equal to transmission bandwidth required after the EWF compression, an average of correlations between the target data stream and data streams other than the target data stream in the cluster m3 may be used as the second threshold ap.

In the foregoing manner 1, the transmit end device may determine the first-type cluster and the second-type cluster from the p clusters. Correspondingly, in step 203, the transmit end device may compress a data stream in the first-type cluster in the first compression manner, compress a data stream in the second-type cluster in the second compression manner, combine clusters obtained after the compression, and send a combined data stream to the receive end device.

In the foregoing manner 1, after the data streams are preliminarily grouped into the p clusters, it is determined whether the average of the correlations between the target data stream and the data streams other than the target data stream in the cluster is greater than the second threshold, and it is determined whether the cluster is a first-type cluster, so that a cluster corresponding to a relatively large correlation average, namely, a cluster including highly correlated data streams, is determined from the plurality of clusters, thereby pertinently performing space-time compression on the clusters to improve compression efficiency. In addition, preliminary grouping is performed based on the correlation between the data streams. Therefore, based on the preliminary grouping, it is simpler and more convenient to calculate the average of the correlations between the target data stream and the data streams other than the target data stream in the cluster, so that processing resources can be effectively saved.

Manner 2

The transmit end device separately compresses, in the first compression manner and the second compression manner, any cluster of the p—1 clusters meeting the second preset condition; and the transmit end device determines whether transmission bandwidth required after a data stream in the any cluster is compressed in the first compression manner is less than transmission bandwidth required after the data stream in the any cluster is compressed in the second compression manner, and if yes, determines that the any cluster meets the first preset condition; otherwise, determines that the any cluster does not meet the first preset condition.

In the foregoing manner 2, for the p-1 clusters meeting the second preset condition, the transmit end device may obtain a cluster obtained after the first-type cluster is compressed in the first compression manner and a cluster obtained after the second-type cluster is compressed in the second compression manner. For a remaining cluster that does not meet the second preset condition, the transmit end device may determine the cluster as the second-type cluster, and directly compress the cluster in the second compression manner, or separately compress the cluster in the first compression manner and the second compression manner. Correspondingly, in step 203, the transmit end device may directly combine the cluster obtained after the first-type cluster is compressed in the first compression manner and the cluster obtained after the second-type cluster is compressed in the second compression manner, and then send the combined data stream to the receive end device.

In the foregoing manner 2, it is determined, based on transmission bandwidth required after compression is performed in the first compression manner and the second compression manner, that the cluster is a first-type cluster or a second-type cluster, so that a result of the determining can be more accurate and compression efficiency can be more effectively improved.

Specifically, that the transmit end device combines the cluster obtained after the first-type cluster is compressed in the first compression manner and the cluster obtained after the second-type cluster is compressed in the second compression manner in step 203 is specifically: the transmit end device adds a first-type preamble to each cluster compressed in the first compression manner, adds a second-type preamble to each cluster compressed in the second compression manner, and performs TDM (Time Division Multiplexing, time division multiplexing) or FDM (Frequency Division Multiplexing, frequency division multiplexing) combination on the cluster to which the first-type preamble is added, the cluster to which the second-type preamble is added, and the CW (Control Word, control word) data stream.

In this embodiment of the present invention, for a cluster compressed in the first compression manner, the transmit end device may allocate one first-type preamble to each cluster compressed in the first compression manner, and add the first-type preamble to a front end of each cluster compressed in the first compression manner. The first-type preamble is used by the receive end device to distinguish each cluster compressed in the first compression manner, to decompress each cluster compressed in the first compression manner. Therefore, first-type preambles allocated by the transmit end device to all clusters compressed in the first compression manner may be the same or may be different, and this is not specifically limited. For a cluster compressed in the second compression manner, the transmit end device may combine clusters compressed in the second compression manner into one cluster, and allocate one second-type preamble to the combined cluster. The second-type preamble is used by the receive end device to distinguish a cluster compressed in the second compression manner, to decompress the cluster compressed in the second compression manner.

In step 204 and step 205, the receive end device receives the data stream sent by the transmit end device, and splits the combined data stream to obtain the plurality of clusters and the CW data stream; and if determining that any cluster of the plurality of clusters includes the first-type preamble, the receive end device determines that the any cluster is a cluster compressed in the first compression manner, and if determining that the any cluster includes the second-type preamble, determines that the any cluster is a cluster compressed in the second compression manner.

In step 206 and step 207, after determining the cluster compressed in the first compression manner and the cluster compressed in the second compression manner, the receive end device separately decompresses the compressed clusters, combines the decompressed data stream and the CW data stream according to the CPRI protocol, and may send combined data to a BBU or an RRU on the receive end device side.

It can be learned from the foregoing content that the data transmission method in this application includes a data sending process and a data receiving process. The following separately describes in detail the data sending process of the transmit end device and the data receiving process of the receive end device.

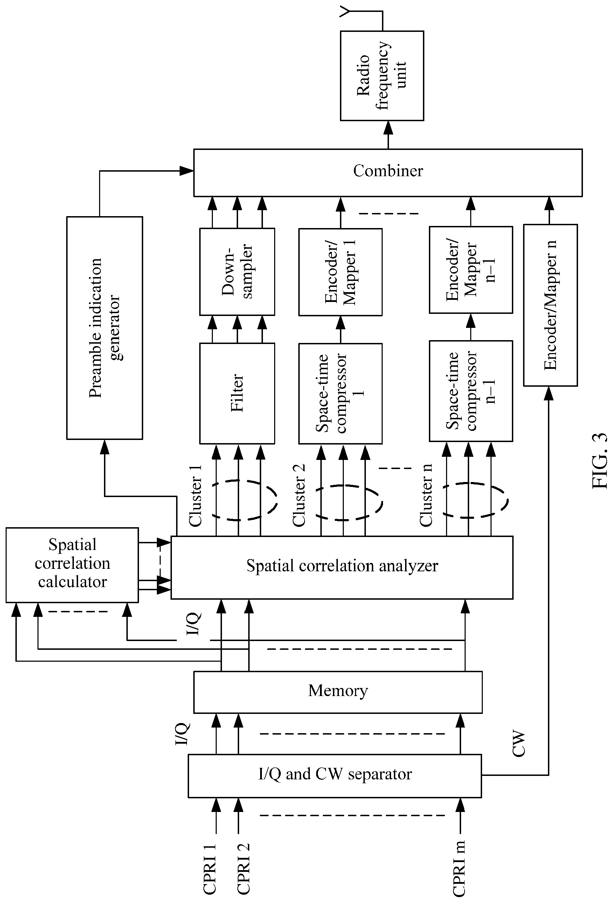

FIG. 3 is a schematic flowchart of a first data sending method according to this application.

As shown in FIG. 3, a transmit end device may include an I/Q and CW separator, a memory, a spatial correlation calculator, a spatial correlation analyzer, a preamble indication generator, a filter, a down-sampler, and a plurality of space-time compressors (for example, a space-time compressor 1, ..., and a space-time compressor n-1), a plurality of encoders/mappers (for example, an encoder/a mapper 1, ..., and an encoder/a mapper n-1) corresponding to the plurality of space-time compressors and an encoder/a mapper n, a combiner, and a radio frequency unit.

Specifically, the transmit end device inputs m to-be-sent CPRI data streams (a CPRI 1, a CPRI 2, ..., and a CPRI m shown in FIG. 3) into the I/Q and CW separator, and the I/Q and CW separator separates the m to-be-sent CPRI data streams to obtain m I/Q data streams and a CW data stream.

The I/Q and CW separator inputs the m I/Q data streams into the memory. The I/Q and CW separator inputs the CW data stream into the encoder/mapper n, and the encoder/mapper n inputs the CW data stream into the combiner after performing encoding and mapping.

The memory inputs the m I/Q data streams into both the spatial correlation calculator and the spatial correlation analyzer.

The spatial correlation calculator calculates a correlation between the I/Q data streams, and sends a calculation result of the correlation to the spatial correlation analyzer.

The spatial correlation analyzer first groups the m I/Q data streams into p clusters based on the calculation result of the correlation between the I/Q data streams, where the p clusters include p-1 clusters meeting a second preset condition, and the second preset condition is that a correlation between a data stream other than a target data stream in the cluster and the target data stream is greater than or equal to a first threshold.

Subsequently, the spatial correlation analyzer determines, in the foregoing manner 1, clusters (for example, a cluster 2, ..., and a cluster n) meeting a first preset condition from the p—1 clusters meeting the second preset condition, determines the cluster 2, ..., and the cluster n as first-type clusters, and determines a cluster in the p clusters except the first-type cluster as a second-type cluster.

It should be noted that, if there are a plurality of clusters in the p clusters except the first-type cluster, the plurality of cluster are all second-type clusters. For ease of processing, in this embodiment of the present invention, the plurality of second-type clusters may be combined into one cluster, and the combined cluster (for example, a cluster 1) is used as a final second-type cluster.

The spatial correlation analyzer sends a grouping result of the first-type cluster and the second-type cluster to the preamble indicator. The preamble indicator allocates a first-type preamble to the first-type cluster and allocates a second-type preamble to the second-type cluster based on the grouping result, and sends the allocated first-type preamble and the allocated second-type preamble to the combiner.

The spatial correlation analyzer inputs the cluster 1 into the filter and the down-sampler to perform EWF compression, and inputs a data stream obtained after the EWF compression to the combiner. The spatial correlation analyzer respectively inputs the cluster 2, ..., and the cluster n into the plurality of space-time compressors and the plurality of encoders/mappers corresponding to the plurality of space-time compressors. Specifically, the cluster 2 is input into the space-time compressor 1 and the encoder/mapper 1 to perform space-time compression, and encoding and mapping. By analogy, the cluster n is input into the space-time compressor n-1 and the encoder/mapper n—1 to perform space-time compression, and encoding and mapping, and a data stream obtained after the space-time compression and the encoding and mapping is input into the combiner.

The combiner adds the first-type preamble to a cluster compressed in a space-time compression manner and adds the second-type preamble to a cluster compressed in an EWF compression manner, and performs TDM or FDM combination on the cluster to which the first-type preamble is added, the cluster to which the second-type preamble is added, and the CW data stream.

The combiner sends combined data to the radio frequency unit, so that the radio frequency unit sends the combined data to a receive end device.

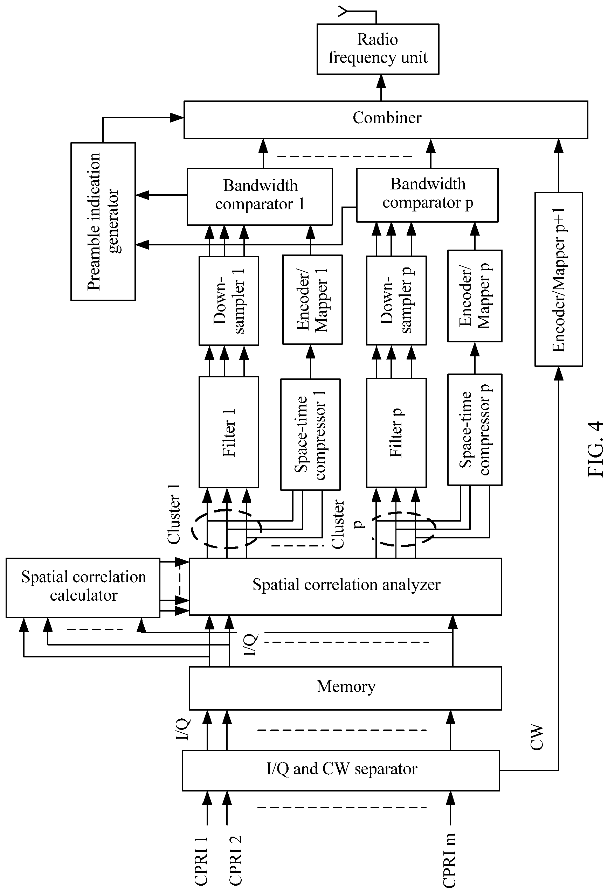

FIG. 4 is a schematic flowchart of a second data sending method according to this application.

As shown in FIG. 4, a transmit end device may include an I/Q and CW separator, a memory, a spatial correlation calculator, a spatial correlation analyzer, a preamble indication generator, a plurality of filters (for example, a filter 1, ...,

and a filter p), a plurality of down-samplers (for example, a down-sampler 1, ..., and a down-sampler p) corresponding to the plurality of filters, a plurality of space-time compressors (for example, a space-time compressor 1, ..., and a space-time compressor p), a plurality of encoders/mappers (for example, an encoder/a mapper 1, ..., and an encoder/a mapper p) corresponding to the plurality of space-time compressors, a plurality of bandwidth comparators (for example, a bandwidth comparator 1, ..., and a bandwidth comparator p), a combiner, and a radio frequency unit. The filter 1, the down-sampler 1, the space-time compressor 1, and the encoder/mapper 1 are corresponding to the bandwidth comparator 1. By analogy, the filter p, the down-sampler p, the space-time compressor p, and the encoder/mapper p are corresponding to the bandwidth comparator p.

Specifically, the transmit end device inputs m to-be-sent CPRI data streams (a CPRI 1, a CPRI 2, ..., and a CPRI m shown in FIG. 3) into the I/Q and CW separator, and the I/Q and CW separator separates the m to-be-sent CPRI data streams to obtain m I/Q data streams and a CW data stream.

The I/Q and CW separator inputs the m I/Q data streams into the memory. The I/Q and CW separator inputs the CW data stream into an encoder/a mapper p+1, and the encoder/mapper p+1 inputs the CW data stream into the combiner after performing encoding and mapping.

The memory inputs the m I/Q data streams into both the spatial correlation calculator and the spatial correlation analyzer.

The spatial correlation calculator calculates a correlation between the I/Q data streams, and sends a calculation result of the correlation to the spatial correlation analyzer.

The spatial correlation analyzer first groups the m I/Q data streams into p clusters (for example, a cluster 1, ..., and a cluster p) based on the calculation result of the correlation between the I/Q data streams, where the p clusters include p—1 clusters meeting a second preset condition, and the second preset condition is that a correlation between a data stream other than a target data stream in the cluster and the target data stream is greater than or equal to a first threshold.

Subsequently, the spatial correlation analyzer inputs each of the p clusters into the filter and the down-sampler for EWF compression, and inputs each of the p clusters into the space-time compressor and the encoder/mapper for space-time compression, and inputs a cluster obtained after the EWF compression and a cluster obtained after the space-time compression into the bandwidth comparator. Specifically, the spatial correlation analyzer inputs the cluster 1 into the filter 1 and the down-sampler 1 for EWF compression, inputs the cluster 1 into the space-time compressor 1 and the encoder/mapper 1 for space-time compression, and inputs a cluster obtained after the EWF compression and a cluster obtained after the space-time compression into the bandwidth comparator 1 for bandwidth comparison. By analogy, the spatial correlation analyzer inputs the cluster p into the filter p and the down-sampler p for EWF compression, inputs the cluster 1 into the space-time compressor p and the encoder/mapper p for space-time compression, and inputs a cluster obtained after the EWF compression and a cluster obtained after the space-time compression into the bandwidth comparator p for bandwidth comparison.

If determining that transmission bandwidth required by a cluster obtained after the EWF compression is less than or equal to transmission bandwidth required by a cluster obtained after the space-time compression, each of the plurality of bandwidth comparators may determine that the cluster is a second-type cluster, and input the cluster obtained after the EWF compression into the combiner. If determining that the transmission bandwidth required by the cluster obtained after the EWF compression is greater than the transmission bandwidth required by the cluster obtained after the space-time compression, each of the plurality of bandwidth comparators may determine that the cluster is a first-type cluster, and input the cluster obtained after the space-time compression into the combiner. For example, if determining that transmission bandwidth required by a cluster obtained after the EWF compression is less than or equal to transmission bandwidth required by a cluster obtained after the space-time compression, the bandwidth comparator 2 may determine that the cluster 2 is a second-type cluster, and input the cluster obtained after the EWF compression is performed on the cluster 2 into the combiner; if determining that the transmission bandwidth required by the cluster obtained after the EWF compression is greater than the transmission bandwidth required by the cluster obtained after the space-time compression, the bandwidth comparator 2 may determine that the cluster 2 is a first-type cluster, and input the cluster obtained after the space-time compression is performed on the cluster 2 into the combiner.

After comparing the transmission bandwidth required by the cluster obtained after the EWF compression with the transmission bandwidth required by the cluster obtained after the space-time compression, each of the plurality of bandwidth comparators may further input a result of the comparison into the preamble indication generator, so that the preamble indication generator generates a first-type preamble and a second-type preamble, and sends the generated first-type preamble and the generated second-type preamble to the combiner. For example, if determining that the transmission bandwidth required by the cluster obtained after the EWF compression is greater than the transmission bandwidth required by the cluster obtained after the space-time compression, the bandwidth comparator 2 may determine that the cluster 2 is the first-type cluster, and input the result into the preamble indication generator. The preamble indication generator generates a first-type preamble for the cluster 2 based on the result, and sends the first-type preamble generated for the cluster 2 to the combiner.

After receiving information sent by the preamble indication generator and the plurality of bandwidth comparators, the combiner separately adds first-type preambles to clusters compressed in the first compression manner (for example, a compressed cluster 2, ..., and a compressed cluster n), combines clusters compressed in the second compression manner into one cluster, adds a second-type preamble to the combined cluster (for example, a compressed cluster1), and then performs TDM or FDM combination on the cluster to which the first-type preamble is added, the cluster to which the second-type preamble is added, and the CW data stream.

The combiner sends combined data to the radio frequency unit, so that the radio frequency unit sends the combined data to a receive end device.

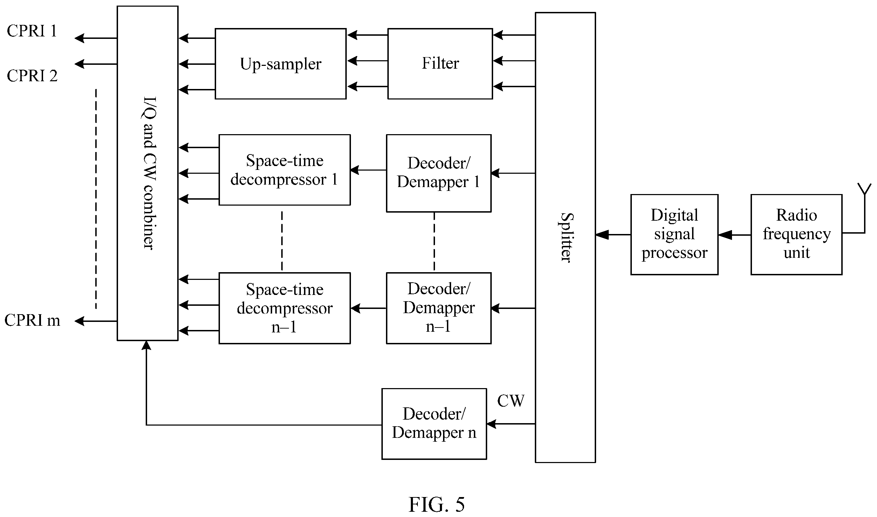

FIG. 5 is a schematic flowchart of a data receiving method according to this application.

As shown in FIG. 5, a receive end device may include a radio frequency unit, a digital signal processor, a splitter, a plurality of space-time decompressors (for example, a space-time decompressor 1, ..., and a space-time decompressor n-1), a plurality of decoders/demappers (for example, a decoder/demapper 1, ..., and a decoder/demapper n-1) corresponding to the plurality of space-time decompressors and a decoder/demapper n, a filter, an up-sampler, an I/Q and CW combiner.

Specifically, the receive end device receives a combined data stream by using the radio frequency unit, and inputs the received combined data stream to the digital signal processor.

The digital signal processor processes the combined data stream, and inputs the data stream to the splitter after eliminating impact of a microwave channel.

The splitter splits the combined data stream to obtain a plurality of clusters (for example, a compressed cluster 1, ..., and a compressed cluster n) and a CW data stream. If determining that any cluster of the plurality of clusters includes a first-type preamble, the splitter determines that the any cluster is a cluster compressed in a space-time compression manner, inputs the cluster compressed in the space-time compression manner into the decoder/demapper and the space-time decompressor for decompression, and inputs a decompressed data stream into the I/Q and CW combiner. If determining that any cluster of the plurality of clusters includes a second-type preamble, the splitter determines that the any cluster is a cluster compressed in an EWF compression manner, inputs the cluster compressed in the EWF compression manner into the filter and the up-sampler for decompression, and inputs a decompressed data stream into the I/Q and CW combiner.

For example, if determining that the compressed cluster 1 includes the second-type preamble, the splitter may determine that the compressed cluster 1 is a cluster compressed in the EWF compression manner, inputs the compressed cluster 1 into the filter and the up-sampler for decompression, and inputs a decompressed data stream into the I/Q and CW combiner. If determining that the compressed cluster 2 includes the first-type preamble, the splitter may determine that the compressed cluster 2 is a cluster compressed in the space-time compression manner, inputs the compressed cluster 2 into the space-time decompressor 1 and the decoder/demapper 1 for decompression, and inputs a decompressed data stream into the I/Q and CW combiner.

By analogy, if determining that the compressed cluster n includes the first-type preamble, the splitter may determine that the compressed cluster n is a cluster compressed in the space-time compression manner, inputs the compressed cluster n into the space-time decompressor n-1 and the decoder/demapper n-1 for decompression, and inputs a decompressed data stream into the I/Q and CW combiner.

For the CW data stream, the splitter inputs the CW data stream to the decoder/demapper n, and the decoder/demapper n inputs the CW data stream into the I/Q and CW combiner after performing decoding and demapping.

The I/Q and CW combiner combines the decompressed data stream and the CW data stream according to the CPRI protocol.

It should be noted that, the data receiving method shown in FIG. 5 may be separately corresponding to the foregoing first data sending method and the foregoing second data sending method. In other words, data sent by using the foregoing first data sending method and the foregoing second data sending method may be received by using the data receiving method shown in FIG. 5.

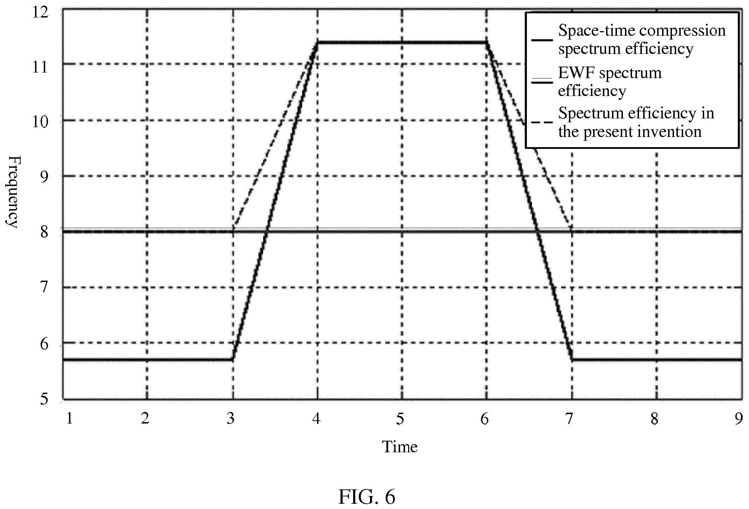

The data transmission method in this application can further improve spectrum efficiency based on an existing CPRI bearer. FIG. 6 is an example diagram of spectrum efficiency in different compression manners. In the example shown in FIG. 6, it is assumed that when a spatial correlation is high, space-time domain implements 11.4 times of compression, and when a spatial correlation is low, space domain implements 1.9 times of compression and time domain can implement 5.7 times of compression. EWF can regularly implement 8 times of compression. In this application, spectrum efficiency can be increased by 20% and 14% respectively compared with CPRI compression and EWF within a given time interval.

It should be noted that, the data transmission method in this application may be applied to a plurality of transmission fields, for example, the foregoing described microwave transmission field, or may be applied to the optical transmission field. In this case, transmission medium may change from a microwave to an optical fiber, and a radio frequency unit may change into an electrical-to-optical/optical-to-electrical converter.

For the foregoing method procedures, this application further provides a transmit end device and a receive end device. For specific content of the transmit end device and the receive end device, refer to the foregoing methods for implementation.

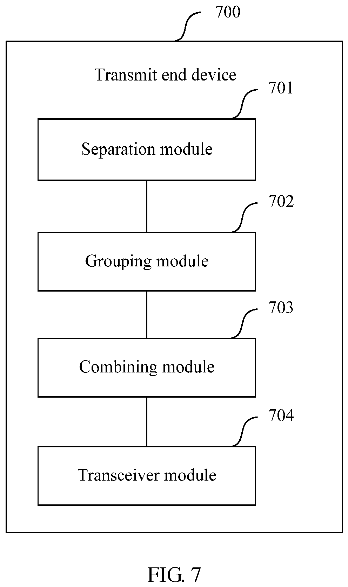

FIG. 7 is a schematic structural diagram of a transmit end device according to an embodiment which is not according to the invention. As shown in FIG. 7, the transmit end device 700 includes:

a separation module 701, configured to separate m to-be-sent common public radio interface CPRI data streams to obtain m in-phase and quadrature I/Q data streams;

a grouping module 702, configured to group the m I/Q data streams into a plurality of clusters based on a correlation between the m I/Q data streams, where at least one of the plurality of clusters is a first-type cluster, the first-type cluster meets a first preset condition, and the first preset condition is that transmission bandwidth required after a data stream in a cluster is compressed in a first compression manner is less than transmission bandwidth required after the data stream in the cluster is compressed in a second compression manner;

a combining module 703, configured to combine a cluster obtained after each first-type cluster is compressed in the first compression manner and a cluster obtained after each second-type cluster is compressed in the second compression manner; and

a transceiver module 704, configured to send a combined data stream to a receive end device, where the second-type cluster is a cluster in the plurality of clusters except the first-type cluster.

Optionally, the grouping module 702 is specifically configured to:

group the m I/Q data streams into p clusters based on the correlation between the m I/Q data streams, where the p clusters include p—1 clusters meeting a second preset condition, and the second preset condition is that a correlation between a data stream other than a target data stream in a cluster and the target data stream is greater than or equal to a first threshold, where p is a positive integer greater than 1; and

determine a cluster that meets the first preset condition in the p-1 clusters meeting the second preset condition as the first-type cluster.

Optionally, the grouping module 702 is specifically configured to determine, in the following manner, that the cluster meeting the second preset condition meets the first preset condition:

determining whether an average of correlations between the target data stream and data streams other than the target data stream in any cluster of the p-1 clusters meeting the second preset condition is greater than a second threshold, and if yes,

determining that the any cluster meets the first preset condition, where the second threshold is greater than the first threshold.

Optionally, the grouping module 702 is specifically configured to determine, in the following manner, that the cluster meeting the second preset condition meets the first preset condition:

separately compressing, in the first compression manner and the second compression manner, any cluster of the p-1 clusters meeting the second preset condition; and

determining whether transmission bandwidth required after a data stream in the any cluster is compressed in the first compression manner is less than transmission bandwidth required after the data stream in the any cluster is compressed in the second compression manner, and if yes, determining that the any cluster meets the first preset condition.

Optionally, the first compression manner is space-time compression, and the second compression manner is efficient wireless fronthaul EWF compression.

Optionally, the combining module 703 is specifically configured to:

add a first-type preamble to each cluster compressed in the first compression manner, and add a second-type preamble to each cluster compressed in the second compression manner; and

combine the cluster to which the first-type preamble is added and the cluster to which the second-type preamble is added.

Optionally, after separating the m to-be-sent CPRI data streams, the separation module 701 is further configured to obtain a control word CW data stream.

The combining module 703 is specifically configured to:

combine the cluster to which the first-type preamble is added, the cluster to which the second-type preamble is added, and the CW data stream.

Optionally, the combining module 703 is specifically configured to:
perform time division multiplexing TDM or frequency division multiplexing FDM combination on the cluster to which the first-type preamble is added, the cluster to which the second-type preamble is added, and the CW data stream.

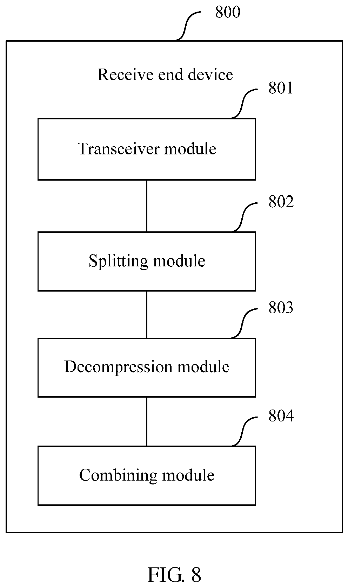

FIG. 8 is a schematic structural diagram of a receive end device according to an embodiment which is not according to the invention. As shown in FIG. 8, the receive end device 800 includes:

a transceiver module 801, configured to receive a data stream sent by a transmit end device;
a splitting module 802, configured to split the received data stream to obtain a cluster compressed in a first compression manner and a cluster compressed in a second compression manner;
a decompression module 803, configured to separately decompress the cluster compressed in the first compression manner and the cluster compressed in the second compression manner, to obtain a decompressed data stream; and
a combining module 804, configured to combine the decompressed data stream according to the CPRI protocol.

Optionally, the splitting module 802 is specifically configured to:

split the received data stream to obtain a plurality of clusters; and
if determining that any cluster of the plurality of clusters includes a first-type preamble, determine that the any cluster is the cluster compressed in the first compression manner, and if determining that the any cluster includes a second-type preamble, determine that the any cluster is the cluster compressed in the second compression manner.

Optionally, after splitting the received data stream, the splitting module 802 is further configured to obtain a CW data stream.

The combining module 804 is specifically configured to:
combine the decompressed data stream and the CW data stream according to the CPRI protocol.

Optionally, the first compression manner is space-time compression, and the second compression manner is EWF compression.

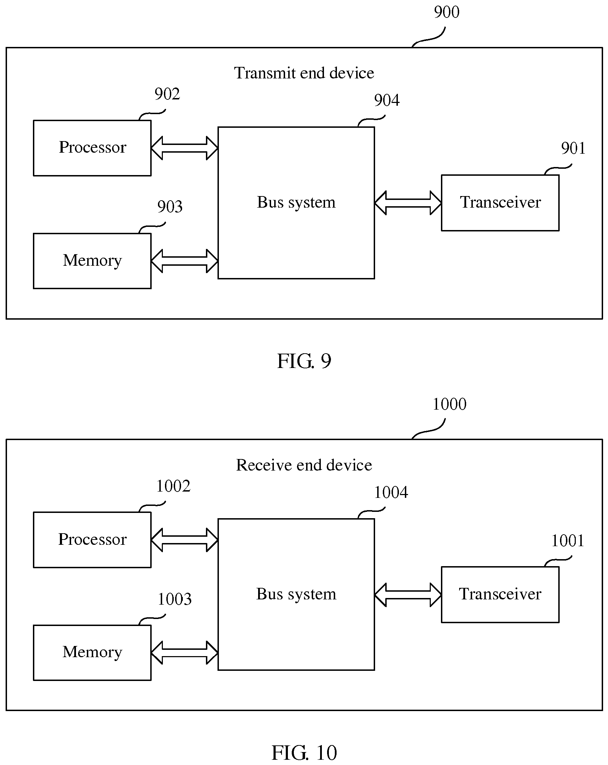

FIG. 9 is a schematic structural diagram of another transmit end device according to an embodiment of the present invention. As shown in FIG. 9, the transmit end device 900 includes a transceiver 901, a processor 902, a memory 903, and a bus system 904.

The memory 903 is configured to store a program. Specifically, the program may include program code, and the program code includes a computer operation instruction. The memory 903 may be a random access memory (random access memory, RAM for short), or may be a non-volatile memory (non-volatile memory), for example, at least one magnetic disk memory. Only one memory is shown in the figure. Certainly, a plurality of memories may be disposed as required. Alternatively, the memory 903 may be a memory in the processor 902.

The memory 903 stores the following elements: an executable module or a data structure, a subset thereof, or an extended set thereof:

operation instructions, including various operation instructions for implementing various operations; and
an operating system, including various system programs for implementing various basic services and processing hardware-based tasks.

The processor 902 controls an operation of the transmit end device 900, and the processor 902 may also be referred to as a CPU (Central Processing Unit, central processing unit). During specific application, components of the transmit end device 900 are coupled together through the bus system 904. In addition to a data bus, the bus system 904 may include a power bus, a control bus, a status signal bus, and the like. However, for clear description, various types of buses in the figure are marked as the bus system 904. For ease of illustration, FIG. 9 merely shows an example of the bus system 904.

The foregoing methods disclosed in the embodiments of this application may be applied to the processor 902, or may be implemented by the processor 902. The processor 902 may be an integrated circuit chip and has a signal processing capability. In an implementation process, steps of the foregoing methods may be implemented by using a hardware integrated logic circuit in the processor 902 or by using instructions in a form of software. The processor 902 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor 902 may implement or perform the methods, the steps, and the logical block diagrams that are disclosed in the embodiments of this application. The general purpose processor may be a microprocessor, or the processor may be any conventional processor or the like. Steps of the methods disclosed with reference to the embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 903. The processor 902 reads information in the memory 903, and performs the following steps in combination with the hardware in the processor 902:
separating m to-be-sent common public radio interface CPRI data streams to obtain m in-phase and quadrature I/Q data streams; grouping the m I/Q data streams into a plurality of clusters based on a correlation between the m I/Q data streams, where at least one of the plurality of clusters is a first-type cluster, the first-type cluster meets a first preset condition, and the first preset condition is that transmission bandwidth required after a data stream in a cluster is compressed in a first compression manner is less than transmission bandwidth required after the data stream in the cluster is compressed in a second compression manner; and combining a cluster obtained after each first-type cluster is compressed in the first compression manner and a cluster obtained after each second-type cluster is compressed in the second compression manner, and sending a combined data stream to a receive end device by using the transceiver 901, where the second-type cluster is a cluster in the plurality of clusters except the first-type cluster.

Optionally, the processor 902 is specifically configured to:

group the m I/Q data streams into p clusters based on the correlation between the m I/Q data streams, where the p clusters include p—1 clusters meeting a second preset condition, and the second preset condition is that a correlation between a data stream other than a target data stream in a cluster and the target data stream is greater than or equal to a first threshold, where p is a positive integer greater than 1; and
determine a cluster that meets the first preset condition in the p—1 clusters meeting the second preset condition as the first-type cluster.

Optionally, the processor 902 is specifically configured to determine, in the following manner, that the cluster meeting the second preset condition meets the first preset condition:

determining whether an average of correlations between the target data stream and data streams other than the target data stream in any cluster of the p—1 clusters meeting the second preset condition is greater than a second threshold, and if yes,
determining that the any cluster meets the first preset condition, where the second threshold is greater than the first threshold.

Optionally, the processor 902 is specifically configured to determine, in the following manner, that the cluster meeting the second preset condition meets the first preset condition:

separately compressing, in the first compression manner and the second compression manner, any cluster of the p—1 clusters meeting the second preset condition; and
determining whether transmission bandwidth required after a data stream in the any cluster is compressed in the first compression manner is less than transmission bandwidth required after the data stream in the any cluster is compressed in the second compression manner, and if yes, determining that the any cluster meets the first preset condition.

Optionally, the first compression manner is space-time compression, and the second compression manner is efficient wireless fronthaul EWF compression.

Optionally, the processor 902 is specifically configured to:

add a first-type preamble to each cluster compressed in the first compression manner, and add a second-type preamble to each cluster compressed in the second compression manner; and
combine the cluster to which the first-type preamble is added and the cluster to which the second-type preamble is added.

Optionally, after separating the m to-be-sent CPRI data streams, the processor 902 is further configured to:

obtain a control word CW data stream; and
combine the cluster to which the first-type preamble is added, the cluster to which the second-type preamble is added, and the CW data stream.

Optionally, the processor 902 is specifically configured to:
perform time division multiplexing TDM or frequency division multiplexing FDM combination on the cluster to which the first-type preamble is added, the cluster to which the second-type preamble is added, and the CW data stream.

FIG. 10 is a schematic structural diagram of another receive end device according to an embodiment of the present invention. As shown in FIG. 10, the receive end device 1000 includes a transceiver 1001, a processor 1002, a memory 1003, and a bus system 1004.

The memory 1003 is configured to store a program. Specifically, the program may include program code, and the program code includes a computer operation instruction. The memory 1003 may be a random access memory (random access memory, RAM for short), or may be a non-volatile memory (non-volatile memory), for example, at least one magnetic disk memory. Only one memory is shown in the figure. Certainly, a plurality of memories may be disposed as required. Alternatively, the memory 1003 may be a memory in the processor 1002.

The memory 1003 stores the following elements: an executable module or a data structure, a subset thereof, or an extended set thereof:

operation instructions, including various operation instructions for implementing various operations; and
an operating system, including various system programs for implementing various basic services and processing hardware-based tasks.

The processor 1002 controls an operation of the receive end device 1000, and the processor 1002 may also be referred to as a CPU (Central Processing Unit, central processing unit). During specific application, components of the receive end device 1000 are coupled together through the bus system 1004. In addition to a data bus, the bus system 1004 may include a power bus, a control bus, a status signal bus, and the like. However, for clear description, various types of buses in the figure are marked as the bus system 1004. For ease of illustration, FIG. 10 merely shows an example of the bus system 1004.

The methods disclosed in the embodiments of this application may be applied to the processor 1002, or may be implemented by the processor 1002. The processor 1002 may be an integrated circuit chip and has a signal processing capability. In an implementation process, steps of the foregoing methods may be implemented by using a hardware integrated logic circuit in the processor 1002 or by using instructions in a form of software. The processor 1002 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor 1002 may implement or perform the methods, the steps, and the logical block diagrams that are disclosed in the embodiments of this application. The general purpose processor may be a microprocessor, or the processor may be any conventional processor or the like. Steps of the methods disclosed with reference to the embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1003. The processor 1002 reads information in the memory 1003, and performs the following steps in combination with the hardware in the processor 1002:

receiving, by using the transceiver 1001, a data stream sent by a transmit end device; and
splitting the received data stream to obtain a cluster compressed in a first compression manner and a cluster compressed in a second compression manner; separately decompressing the cluster compressed in the first compression manner and the cluster compressed in the second compression manner, to obtain a decompressed data stream; and combining the decompressed data stream according to the CPRI protocol.

Optionally, the processor 1002 is specifically configured to:

split the received data stream to obtain a plurality of clusters; and
if determining that any cluster of the plurality of clusters includes a first-type preamble, determine that the any cluster is the cluster compressed in the first compression manner, and if determining that the any cluster includes a second-type preamble, determine that the any cluster is the cluster compressed in the second compression manner.

Optionally, after splitting the received data stream, the processor 1002 is further configured to:

obtain a CW data stream; and
combine the decompressed data stream and the CW data stream according to the CPRI protocol.

Optionally, the first compression manner is space-time compression, and the second compression manner is EWF compression.

It can be learned from the foregoing content that, in this application, the transmit end device separates the m to-be-sent CPRI data streams to obtain the m I/Q data streams, and groups the m I/Q data streams into the plurality of clusters, where the at least one of the plurality of clusters is the first-type cluster; and the transmit end device combines the cluster obtained after the first-type cluster is compressed in the first compression manner and the cluster obtained after the second-type cluster is compressed in the second compression manner, and sends the combined data stream to the receive end device. In this application, because transmission bandwidth required after a data stream in the first-type cluster is compressed in the first compression manner is less than transmission bandwidth required after the data stream in the first-type cluster is compressed in the second compression manner, the data stream in the first-type cluster is compressed in the first compression manner, and a data stream in the second-type cluster is compressed in the second compression manner, thereby effectively improving compression efficiency and reducing an amount of data for signal transmission between the transmit end device and the receive end device.

Persons skilled in the art should understand that the embodiments of this application may be provided as a method, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although embodiments of this application have been described, persons skilled in the art can make changes and modifications to these embodiments once they learn the basic inventive concept as set forth in the following claims which are intended to not only cover the embodiments of this application but all changes and modifications falling within the scope of this application, as defined by the following claims.

**Claims**

1. A data transmission method, wherein the method comprises processing steps of:

   separating (201), by a transmit end device, m to-be-sent common public radio interface CPRI data streams to obtain m in-phase and quadrature I/Q data streams;
   grouping (202), by the transmit end device, the m I/Q data streams into a plurality of clusters based on a correlation between the m I/Q data streams, wherein each cluster of the plurality of clusters that meets a first preset condition is a first-type cluster and each other cluster of the plurality of clusters that does not meet the first preset condition is a second-type cluster, and the first preset condition is that transmission bandwidth required after a data stream in a cluster is compressed in a first compression manner is less than transmission bandwidth required after the data stream in the cluster is compressed in a second compression manner; and
   combining (203), by the transmit end device, a cluster obtained after each first-type cluster is compressed in the first compression manner and a cluster obtained after each second-type cluster is compressed in the second compression manner, and

a transmission step of sending the combined data stream to a receive end device.

2. The method according to claim 1, wherein the grouping (202) the m I/Q data streams into a plurality of clusters, wherein each cluster of the plurality of clusters that meets a first preset condition is a first-type cluster comprises:

grouping the m I/Q data streams into p clusters, wherein the p clusters comprise p-1 clusters meeting a second preset condition, and the second preset condition is that a correlation between a data stream other than a target data stream in a cluster and the target data stream is greater than or equal to a first threshold, wherein p is a positive integer greater than 1; and

determining, by the transmit end device, a cluster that meets the first preset condition in the p-1 clusters meeting the second preset condition as the first-type cluster.

3. The method according to claim 2, wherein the transmit end device determines, in the following manner, that the cluster meeting the second preset condition meets the first preset condition:

determining, by the transmit end device, whether an average of correlations between the target data stream and data streams other than the target data stream in any cluster of the p-1 clusters meeting the second preset condition is greater than a second threshold, and if yes, determining that the any cluster meets the first preset condition, wherein the second threshold is greater than the first threshold.

4. The method according to claim 2, wherein the transmit end device determines, in the following manner, that the cluster meeting the second preset condition meets the first preset condition:

separately compressing, by the transmit end device in the first compression manner and the second compression manner, any cluster of the p-1 clusters meeting the second preset condition; and

determining, by the transmit end device, whether transmission bandwidth required after a data stream in the any cluster is compressed in the first compression manner is less than transmission bandwidth required after the data stream in the any cluster is compressed in the second compression manner, and if yes, determining that the any cluster meets the first preset condition.

5. The method according to any one of claims 1 to 4, wherein the first compression manner is space-time compression, and the second compression manner is efficient wireless fronthaul EWF compression.

6. The method according to any one of claims 1 to 5, wherein the combining (203), by the transmit end device, a cluster obtained after each first-type cluster is compressed in the first compression manner and a cluster obtained after each second-type cluster is compressed in the second compression manner comprises:

adding, by the transmit end device, a first-type preamble to each cluster compressed in the first compression manner, and adding a second-type preamble to each cluster compressed in the second compression manner; and

combining, by the transmit end device, the cluster to which the first-type preamble is added and the cluster to which the second-type preamble is added.

7. The method according to claim 6, wherein after the separating (201), by a transmit end device, m to-be-sent CPRI data streams, the method further comprises: obtaining a control word CW data stream; and

the combining (203), by the transmit end device, the cluster to which the first-type preamble is added and the cluster to which the second-type preamble is added comprises:

combining, by the transmit end device, the cluster to which the first-type preamble is added, the cluster to which the second-type preamble is added, and the CW data stream.

8. The method according to claim 7, wherein the combining (203), by the transmit end device, the cluster to which the first-type preamble is added, the cluster to which the second-type preamble is added, and the CW data stream comprises:

performing, by the transmit end device, time division multiplexing TDM or frequency division multiplexing FDM combination on the cluster to which the first-type preamble is added, the cluster to which the second-type preamble is added, and the CW data stream.

9. A data reception method, wherein the method comprises:

a step of receiving (204), by a receive end device, a data stream sent by a transmit end device; and processing steps of:

splitting (205), by the receive end device, the received data stream to obtain a cluster compressed in a first compression manner and a cluster compressed in a second compression manner, wherein any cluster compressed in a first compression manner meets a first preset condition and any cluster compressed in a second compression manner does not meet a first preset condition wherein the first preset condition is that transmission bandwidth required after a data stream in a cluster is compressed in a first compression manner is less than transmission bandwidth required after the data stream in the cluster is compressed in a second compression manner;

separately decompressing (206), by the receive end device, the cluster compressed in the first compression manner and the cluster compressed in the second compression manner, to obtain a decompressed data stream; and

combining (207), by the receive end device, the decompressed data stream according to the CPRI protocol.

10. The method according to claim 9, wherein the splitting (205), by the receive end device, the received data stream to obtain a cluster compressed in a first compression manner and a cluster compressed in a second compression manner comprises:

splitting, by the receive end device, the received data stream to obtain a plurality of clusters; and
if determining that any cluster of the plurality of clusters comprises a first-type preamble, determining, by the receive end device, that the any cluster is the cluster compressed in the first compression manner, and if determining that the any cluster comprises a second-type preamble, determining that the any cluster is the cluster compressed in the second compression manner.

11. The method according to claim 9 or 10, wherein after the splitting (205), by the receive end device, the received data stream, the method further comprises: obtaining a CW data stream; and
the combining (207), by the receive end device, the decompressed data stream according to the CPRI protocol comprises:
combining, by the receive end device, the decompressed data stream and the CW data stream according to the CPRI protocol.

12. The method according to any one of claims 9 to 11, wherein the first compression manner is space-time compression, and the second compression manner is EWF compression.

13. A transmit end device (900), wherein the transmit end device (900) comprises a processor (902) and a transceiver (901) wherein the transceiver is configured to perform a transmission step as defined by any one of the data transmission methods of claims 1 to 8, **characterized in that**
the processor (902) is configured to: perform the processing steps as defined by the respective one of the data transmission methods of claims 1 to 8.

14. A receive end device (1000), wherein the receive end device comprises:

a transceiver (1001), configured to perform a receiving step as defined by any one of the data reception methods of claims 9 to 12 for receiving a data stream sent by a transmit end device (900); and
a processor (1002), **characterized in that** the processor is configured to:
perform the processing steps as defined by the respective one of the data reception methods of claims 9 to 12.

15. A data sending and receiving system, comprising the transmit end device according to claim 13 and the receive end device according to claim 14.

**Patentansprüche**

1. Datenübertragungsverfahren, wobei das Verfahren die folgenden Verarbeitungsschritte umfasst:

Trennen (201), durch ein Übertragungsendgerät, von m zu sendenden Datenströmen einer gemeinsamen öffentlichen Funkschnittstelle, CPRI, um m gleichphasige und Quadratur—I/Q— Datenströme zu erlangen;
Gruppieren (202), durch das Übertragungsendgerät, der m I/Q— Datenströme in eine Vielzahl von Clustern auf Grundlage einer Korrelation zwischen den m I/Q—Datenströmen, wobei jeder Cluster der Vielzahl von Clustern, der eine erste voreingestellte Bedingung erfüllt, ein Cluster erster Art ist und jeder andere Cluster der Vielzahl von Clustern, der die erste voreingestellte Bedingung nicht erfüllt, ein Cluster zweiter Art ist, und die erste voreingestellte Bedingung darin besteht, dass die Übertragungsbandbreite, die erforderlich ist, nachdem ein Datenstrom in einem Cluster in einer ersten Komprimierungsart komprimiert ist, geringer ist als die Übertragungsbandbreite, die erforderlich ist, nachdem der Datenstrom in dem Cluster in einer zweiten Komprimierungsart komprimiert ist; und

Kombinieren (203), durch das Übertragungsendgerät, eines Clusters, der erlangt wird, nachdem jeder Cluster erster Art auf die erste Komprimierungsart komprimiert ist, und eines Clusters, der erlangt wird, nachdem jeder Cluster zweiter Art auf die zweite Komprimierungsart komprimiert ist, und einen Übertragungsschritt des Sendens des kombinierten Datenstroms an ein Empfangsendgerät.

2. Verfahren nach Anspruch 1, wobei das Gruppieren (202) der m I/Q—Datenströme in eine Vielzahl von Clustern, wobei jeder Cluster der Vielzahl von Clustern, der eine erste voreingestellte Bedingung erfüllt, ein Cluster erster Art ist, Folgendes umfasst:

Gruppieren der m I/Q—Datenströme in p Cluster, wobei die p Cluster p—1 Cluster umfassen, die eine zweite voreingestellte Bedingung erfüllen, und die zweite voreingestellte Bedingung darin besteht, dass eine Korrelation zwischen einem anderen Datenstrom als einem Zieldatenstrom in einem Cluster und dem Zieldatenstrom größer als oder gleich einem ersten Schwellenwert ist, wobei p eine positive Ganzzahl größer als 1 ist; und
Bestimmen, durch das Übertragungsendgerät, eines Clusters, der die erste voreingestellte Bedingung in den p—1 Clustern erfüllt, die die zweite voreingestellte Bedingung erfüllen, als Cluster des ersten Typs.

3. Verfahren nach Anspruch 2, wobei das Übertragungsendgerät auf folgende Weise bestimmt, dass der Cluster, der die zweite voreingestellte Bedingung erfüllt, die erste voreingestellte Bedingung erfüllt:
Bestimmen, durch das Übertragungsendgerät, ob ein Durchschnitt von Korrelationen zwischen dem Zieldatenstrom und anderen Datenströmen als dem Zieldatenstrom in einem beliebigen Cluster der p—1 Cluster, die die zweite voreingestellte Bedingung erfüllen, größer als ein zweiter Schwellenwert ist, und wenn ja, Bestimmen, dass der beliebige Cluster die erste voreingestellte Bedingung erfüllt, wobei der zweite Schwellenwert größer als der erste Schwellenwert ist.

4. Verfahren nach Anspruch 2, wobei das Übertragungsendgerät auf folgende Weise bestimmt, dass der Cluster, der die zweite voreingestellte Bedingung erfüllt, die erste voreingestellte Bedingung erfüllt:

separates Komprimieren, durch das Übertragungsendgerät, in der ersten Komprimierungsart und der zweiten Komprimierungsart, eines beliebigen Clusters der p—1 Cluster, der die zweite voreingestellte Bedingung erfüllt; und
Bestimmen, durch das Übertragungsendgerät, ob die Übertragungsbandbreite, die erforderlich ist, nachdem ein Datenstrom in einem beliebigen Cluster in der ersten Komprimierungsart komprimiert ist, geringer ist als die Übertragungsbandbreite, die erforderlich ist, nachdem der Datenstrom in einem beliebigen Cluster in der zweiten Komprimierungsart komprimiert ist, und falls ja, Bestimmen, dass der beliebige Cluster die erste voreingestellte Bedingung erfüllt.

5. Verfahren nach einem der Ansprüche 1 bis 4, wobei die erste Komprimierungsart eine Raum-Zeit-Komprimierung ist und die zweite Komprimierungsart eine effiziente drahtlose Fronthaul-EWF-Komprimierung ist.

6. Verfahren nach einem der Ansprüche 1 bis 5, wobei Kombinieren (203), durch das Übertragungsendgerät, eines Clusters, der erlangt wird, nachdem jeder Cluster erster Art auf die erste Komprimierungsart komprimiert ist, und eines Clusters, der erlangt wird, nachdem jeder Cluster zweiter Art auf die zweite Komprimierungsart komprimiert ist, Folgendes umfasst:

Hinzufügen, durch das Übertragungsendgerät, einer Präambel ersten Typs zu jedem auf die erste Komprimierungsart komprimierten Cluster und Hinzufügen einer Präambel zweiten Typs zu jedem auf die zweite Komprimierungsart komprimierten Cluster; und
Kombinieren, durch das Übertragungsendgerät, des Clusters zu dem die Präambel des ersten Typs hinzugefügt wird und des Clusters zu dem die Präambel des zweiten Typs hinzugefügt wird.

7. Verfahren nach Anspruch 6, wobei nach dem Trennen (201), durch ein Übertragungsendgerät, von m zu sendenden CPRI-Datenströmen das Verfahren ferner Folgendes umfasst: Erlangen eines Steuerwort-, CW-, Datenstroms; und das Kombinieren (203), durch das Übertragungsendgerät, des Clusters zu dem die Präambel des ersten Typs hinzugefügt wird und des Clusters zu dem die Präambel des zweiten Typs hinzugefügt wird Folgendes umfasst: Kombinieren, durch das Übertragungsendgerät, des Clusters zu dem die Präambel des ersten Typs hinzugefügt wird, des Clusters zu dem die Präambel des zweiten Typs hinzugefügt wird und des CW-Datenstroms.

8. Verfahren nach Anspruch 7, wobei das Kombinieren (203), durch das Übertragungsendgerät, des Clusters zu dem die Präambel des ersten Typs hinzugefügt wird, des Cluster, zu dem die Präambel des zweiten Typs hinzugefügt wird und des CW-Datenstroms Folgendes umfasst: Durchführen, durch das Übertragungsendgerät, einer Kombination von Zeitdivisionsmultiplexen, TDM, oder Frequenzdivisionsmultiplexen, FDM, an dem Cluster zu dem die Präambel des ersten Typs hinzugefügt wird, dem Cluster zu dem die Präambel des zweiten Typs hinzugefügt wird und dem CW-Datenstrom.

9. Datenempfangsverfahren, wobei das Verfahren Folgendes umfasst:

   einen Schritt des Empfangens (204), durch ein Empfangsendgerät, eines durch ein Übertragungsendgerät gesendeten Datenstroms; und
   die folgenden Verarbeitungsschritte:
   Aufteilen (205), durch das Empfangsendgerät, des empfangenen Datenstroms, um einen auf eine erste Komprimierungsart komprimierten Cluster und einen auf eine zweite Komprimierungsart komprimierten Cluster zu erlangen, wobei ein beliebiger auf eine erste Komprimierungsart komprimierte Cluster eine erste voreingestellte Bedingung erfüllt und ein beliebiger Cluster, der auf eine zweite Komprimierungsart komprimiert wurde, eine erste voreingestellte Bedingung nicht erfüllt, wobei die erste voreingestellte Bedingung darin besteht, dass die erforderliche Übertragungsbandbreite, nachdem ein Datenstrom in einem Cluster auf eine erste Komprimierungsart komprimiert ist, geringer ist als die Übertragungsbandbreite, die erforderlich ist, nachdem der Datenstrom in dem Cluster auf eine zweite Komprimierungsart komprimiert ist;
   separates Dekomprimieren (206), durch das Empfangsendgerät, des auf die erste Komprimierungsart komprimierten Clusters und des auf die zweite Komprimierungsart komprimierten Clusters, um einen dekomprimierten Datenstrom zu erlangen; und
   Kombinieren (207), durch das Empfangsendgerät, des dekomprimierten Datenstroms gemäß dem CPRI-Protokoll.

10. Verfahren nach Anspruch 9, wobei das Aufteilen (205), durch das Empfangsendgerät, des empfangenen Datenstroms zum Erlangen eines auf eine erste Komprimierungsart komprimierten Clusters und eines auf eine zweite Komprimierungsart komprimierten Clusters Folgendes umfasst:

   Aufteilen, durch das Empfangsendgerät, des empfangenen Datenstroms, um eine Vielzahl von Clustern zu erlangen; und
   wenn bestimmt wird, dass ein beliebiger Cluster der Vielzahl von Clustern eine Präambel des ersten Typs umfasst, Bestimmen, durch das Empfangsendgerät, dass der beliebige Cluster der Cluster ist, der in der ersten Komprimierungsart komprimiert wurde, und wenn bestimmt wird, dass der beliebige Cluster eine Präambel des zweiten Typs umfasst, Bestimmen, dass der beliebige Cluster der Cluster ist, der in der zweiten Komprimierungsart komprimiert wurde.

11. Verfahren nach Anspruch 9 oder 10, wobei nach dem Aufteilen (205), durch das Empfangsendgerät, des empfangenen Datenstroms das Verfahren ferner Folgendes umfasst: Erlangen eines CW-Datenstroms; und
   das Kombinieren (207), durch das Empfangsendgerät, des dekomprimierten Datenstroms gemäß dem CPRI-Protokoll Folgendes umfasst:
   Kombinieren, durch das Empfangsendgerät, des dekomprimierten Datenstroms und des CW-Datenstroms gemäß dem CPRI-Protokoll.

12. Verfahren nach einem der Ansprüche 9 bis 11, wobei die erste Komprimierungsart eine Raum-Zeit-Komprimierung ist und die zweite Komprimierungsart eine EWF-Komprimierung ist.

13. Übertragungsendgerät (900), wobei das Übertragungsendgerät (900) einen Prozessor (902) und einen Sendeempfänger (901) umfasst, wobei der Sendeempfänger dazu konfiguriert ist, einen Übertragungsschritt durchzuführen, wie er durch eines der Datenübertragungsverfahren der Ansprüche 1 bis 8 definiert ist, **dadurch gekennzeichnet, dass**
   der Prozessor (902) zu Folgendem konfiguriert ist: Durchführen der Verarbeitungsschritte wie definiert durch das jeweils eine der Datenübertragungsverfahren der Ansprüche 1 bis 8.

**14.** Empfangsendgerät (1000), wobei das Empfangsendgerät Folgendes umfasst:

einen Sendeempfänger (1001), der dazu konfiguriert ist, einen Empfangsschritt durchzuführen, wie er durch eines der Datenempfangsverfahren der Ansprüche 9 bis 12 definiert ist, um einen Datenstrom zu empfangen, der durch ein Übertragungsendgerät (900) gesendet wird; und
einen Prozessor (1002), **dadurch gekennzeichnet, dass** der Prozessor zu Folgendem konfiguriert ist:
Durchführen der Verarbeitungsschritte, wie sie durch das jeweils eine der Datenempfangsverfahren der Ansprüche 9 bis 12 definiert sind.

**15.** Datensende- und -empfangssystem, das das Übertragungsendgerät nach Anspruch 13 und das Empfangsendgerät nach Anspruch 14 umfasst.

**Revendications**

**1.** Procédé de transmission de données, dans lequel le procédé comprend les étapes de traitement :

de séparation (201), par un dispositif d'extrémité d'émission, de m flux de données CPRI d'interface radio publique commune à envoyer pour obtenir m flux de données I/Q en phase et en quadrature ;
de regroupement (202), par le dispositif d'extrémité d'émission, des m flux de données I/Q dans une pluralité de grappes sur la base d'une corrélation entre les m flux de données I/Q, dans lequel chaque grappe de la pluralité de grappes qui satisfait à une première condition prédéfinie est une grappe de premier type et chaque autre grappe de la pluralité de grappes qui ne satisfait pas à la première condition prédéfinie est une grappe de second type, et la première condition prédéfinie est que la bande passante de transmission requise après la compression selon un premier mode de compression d'un flux de données dans une grappe soit inférieure à la bande passante de transmission requise après la compression selon un second mode de compression du flux de données dans la grappe ; et
de combinaison (203), par le dispositif d'extrémité d'émission, d'une grappe obtenue après la compression selon le premier mode de compression de chaque grappe de premier type et d'une grappe obtenue après la compression selon le second mode de compression de chaque grappe de second type, et
une étape de transmission d'envoi du flux de données combiné vers un dispositif d'extrémité de réception.

**2.** Procédé selon la revendication 1, dans lequel le regroupement (202) des m flux de données I/Q dans une pluralité de grappes, dans lequel chaque grappe de la pluralité de grappes qui satisfait à une première condition prédéfinie est une grappe de premier type, comprend :

le regroupement des m flux de données I/Q en p grappes, dans lequel les p grappes comprennent p—1 grappes satisfaisant à une seconde condition prédéfinie, et la seconde condition prédéfinie est qu'une corrélation entre un flux de données autre qu'un flux de données cible dans une grappe et le flux de données cible soit supérieure ou égale à un premier seuil, dans lequel p est un entier positif supérieur à 1 ; et
la détermination, par le dispositif d'extrémité d'émission, d'une grappe qui satisfait à la première condition prédéfinie dans les p—1 grappes satisfaisant à la seconde condition prédéfinie en tant que grappe de premier type.

**3.** Procédé selon la revendication 2, dans lequel le dispositif d'extrémité d'émission détermine, de la manière suivante, que la grappe satisfaisant à la seconde condition prédéfinie satisfait à la première condition prédéfinie :
en déterminant, par le dispositif d'extrémité d'émission, si une moyenne des corrélations entre le flux de données cible et les flux de données autres que le flux de données cible dans une grappe quelconque des p—1 grappes satisfaisant à la seconde condition prédéfinie est supérieure à un second seuil, et si oui, en déterminant que la grappe quelconque satisfait à la première condition prédéfinie, dans lequel le second seuil est supérieur au premier seuil.

**4.** Procédé selon la revendication 2, dans lequel le dispositif d'extrémité d'émission détermine, de la manière suivante, que la grappe satisfaisant à la seconde condition prédéfinie satisfait à la première condition prédéfinie :

en compressant séparément, par le dispositif d'extrémité d'émission selon le premier mode de compression et le second mode de compression, une quelconque grappe des p—1 grappes satisfaisant à la seconde condition prédéfinie ; et

en déterminant, par le dispositif d'extrémité d'émission, si la bande passante de transmission requise après la compression selon le premier mode de compression d'un flux de données dans la grappe quelconque est inférieure à la bande passante de transmission requise après la compression selon le second mode de compression du flux de données dans la grappe quelconque, et si oui, en déterminant que la grappe quelconque satisfait à la première condition prédéfinie.

5. Procédé selon l'une quelconque des revendications 1 à 4, dans lequel le premier mode de compression est une compression spatio-temporelle, et le second mode de compression est une compression EWF frontale sans fil efficace.

6. Procédé selon l'une quelconque des revendications 1 à 5, dans lequel la combinaison (203), par le dispositif d'extrémité d'émission, d'une grappe obtenue après la compression selon le premier mode de compression de chaque grappe de premier type et d'une grappe obtenue après la compression selon le second mode de compression de chaque grappe de second type comprend :

l'ajout, par le dispositif d'extrémité d'émission, d'un préambule de premier type à chaque grappe compressée selon le premier mode de compression, et l'ajout d'un préambule de second type à chaque grappe compressée selon le second mode de compression ; et
la combinaison, par le dispositif d'extrémité d'émission, de la grappe à laquelle le préambule de premier type est ajouté et la grappe à laquelle le préambule de second type est ajouté.

7. Procédé selon la revendication 6, dans lequel, après la séparation (201), par un dispositif d'extrémité d'émission, des m flux de données CPRI à envoyer, le procédé comprend en outre :

l'obtention d'un flux de données CW de mot de contrôle ; et
la combinaison (203), par le dispositif d'extrémité d'émission, de la grappe à laquelle le préambule de premier type est ajouté et la grappe à laquelle le préambule de second type est ajouté comprend :
la combinaison, par le dispositif d'extrémité d'émission, de la grappe à laquelle le préambule de premier type est ajouté, de la grappe à laquelle le préambule de second type est ajouté et du flux de données CW.

8. Procédé selon la revendication 7, dans lequel la combinaison (203), par le dispositif d'extrémité d'émission, de la grappe à laquelle le préambule de premier type est ajouté, de la grappe à laquelle le préambule de second type est ajouté, et du flux de données CW comprend :
la réalisation, par le dispositif d'extrémité d'émission, d'une combinaison TDM de multiplexage temporel ou FDM de multiplexage fréquentiel sur la grappe à laquelle le préambule de premier type est ajouté, la grappe à laquelle le préambule de second type est ajouté, et le flux de données CW.

9. Procédé de réception de données, dans lequel le procédé comprend :
une étape de réception (204), par un dispositif d'extrémité de réception, d'un flux de données envoyé par un dispositif d'extrémité d'émission ; et les étapes de traitement :

de fractionnement (205), par le dispositif d'extrémité de réception, du flux de données reçu pour obtenir une grappe compressée selon un premier mode de compression et une grappe compressée selon un second mode de compression, dans lequel une grappe quelconque compressée selon un premier mode de compression satisfait à une première condition prédéfinie et une grappe quelconque compressée selon un second mode de compression ne satisfait pas à une première condition prédéfinie, dans lequel la première condition prédéfinie est que la bande passante de transmission requise après la compression selon un premier mode de compression d'un flux de données dans une grappe soit inférieure à la bande passante de transmission requise après la compression selon un second mode de compression du flux de données dans la grappe ;
de décompression séparée (206), par le dispositif d'extrémité de réception, de la grappe compressée selon le premier mode de compression et la grappe compressée selon le second mode de compression, pour obtenir un flux de données décompressé ; et
de combinaison (207), par le dispositif d'extrémité de réception, du flux de données décompressé selon le protocole CPRI.

10. Procédé selon la revendication 9, dans lequel la division (205), par le dispositif d'extrémité de réception, du flux de données reçu pour obtenir une grappe compressée selon un premier mode de compression et une grappe compressée selon un second mode de compression comprend :

le fractionnement, par le dispositif d'extrémité de réception, du flux de données reçu pour obtenir une pluralité de grappes ; et

s'il est déterminé qu'une grappe quelconque de la pluralité de grappes comprend un préambule de premier type, le fait de déterminer, par le dispositif d'extrémité de réception, que la grappe quelconque est la grappe compressée selon le premier mode de compression, et s'il est déterminé que la grappe quelconque comprend un préambule de second type, le fait de déterminer que la grappe quelconque est la grappe compressée selon le second mode de compression.

11. Procédé selon la revendication 9 ou 10, dans lequel, après le fractionnement (205), par le dispositif d'extrémité de réception, du flux de données reçu, le procédé comprend en outre : l'obtention d'un flux de données CW ; et

la combinaison (207), par le dispositif d'extrémité de réception, du flux de données décompressé selon le protocole CPRI comprend :

la combinaison, par le dispositif d'extrémité de réception, du flux de données décompressé et du flux de données CW selon le protocole CPRI.

12. Procédé selon l'une quelconque des revendications 9 à 11, dans lequel le premier mode de compression est une compression spatio-temporelle, et le second mode de compression est une compression EWF.

13. Dispositif d'extrémité d'émission (900), dans lequel le dispositif d'extrémité d'émission (900) comprend un processeur (902) et un émetteur-récepteur (901) dans lequel l'émetteur-récepteur est configuré pour effectuer une étape de transmission telle que définie par l'un quelconque des procédés de transmission de données des revendications 1 à 8, **caractérisé en ce que**

le processeur (902) est configuré pour : effectuer les étapes de traitement telles que définies par l'un respectif des procédés de transmission de données des revendications 1 à 8.

14. Dispositif d'extrémité de réception (1000), dans lequel le dispositif d'extrémité de réception comprend :

un émetteur-récepteur (1001), configuré pour effectuer une étape de réception telle que définie par l'un quelconque des procédés de réception de données des revendications 9 à 12 pour recevoir un flux de données envoyé par un dispositif d'extrémité d'émission (900) ; et

un processeur (1002), **caractérisé en ce que** le processeur est configuré pour :

effectuer les étapes de traitement telles que définies par l'un respectif des procédés de réception de données des revendications 9 à 12.

15. Système d'envoi et de réception de données, comprenant le dispositif d'extrémité d'émission selon la revendication 13 et le dispositif d'extrémité de réception selon la revendication 14.

101    103    104    102

| BBU | Transmit end device/Receive end device | | Transmit end device/Receive end device | RRU |

FIG. 1

```
┌─────────────────────────┐                    ┌─────────────────────────┐
│   Transmit end device   │                    │   Receive end device    │
└─────────────────────────┘                    └─────────────────────────┘
             │                                              │
             │                                              │
             │                        ┌─ 201                │
  ┌──────────┴──────────────────────┐                       │
  │ A transmit end device separates m to-be-sent            │
  │ CPRI data streams to obtain m I/Q data streams          │
  └──────────┬──────────────────────┘                       │
             │                        ┌─ 202                 │
  ┌──────────┴──────────────────────┐                       │
  │ The transmit end device groups the m I/Q data           │
  │ streams into a plurality of clusters, where at          │
  │ least one of the plurality of clusters is a first-      │
  │ type cluster                                            │
  └──────────┬──────────────────────┘                       │
             │                        ┌─ 203                 │
  ┌──────────┴──────────────────────┐                       │
  │ The transmit end device combines a cluster              │
  │ obtained after each first-type cluster is               │
  │ compressed in a first compression manner and            │
  │ a cluster obtained after each second-type cluster       │
  │ is compressed in a second compression manner,           │
  │ and sends a combined data stream to a receive           │
  │ end device                                              │
  └──────────┬──────────────────────┘                       │
             │──────────────────────────────────────────────▶│
             ╲                                              ╲
           TO                                             TO
         FIG. 2B                                        FIG. 2B
```

FIG. 2A

CONT.
FROM
FIG. 2A

CONT.
FROM
FIG. 2A

204

The receive end device receives the data stream sent by the transmit end device

205

The receive end device splits the received data stream to obtain the cluster compressed in the first compression manner and the cluster compressed in the second compression manner

206

The receive end device separately decompresses the cluster compressed in the first compression manner and the cluster compressed in the second compression manner, to obtain a decompressed data stream

207

The receive end device combines the decompressed data stream according to the CPRI protocol

FIG. 2B

FIG. 3

FIG. 4

CPRI 1

CPRI 2

CPRI m

I/Q and CW combiner

Up-sampler

Filter

Space-time decompressor 1

Decoder/ Demapper 1

Space-time decompressor n–1

Decoder/ Demapper n–1

Decoder/ Demapper n

CW

Splitter

Digital signal processor

Radio frequency unit

FIG. 5

FIG. 6

700

Transmit end device

701

Separation module

702

Grouping module

703

Combining module

704

Transceiver module

FIG. 7

800

```
┌─────────────────────────────────────────┐
│          Receive end device             │
│                              ┌─ 801      │
│      ┌───────────────────────┐           │
│      │   Transceiver module  │           │
│      └───────────────────────┘           │
│                   │          ┌─ 802      │
│      ┌───────────────────────┐           │
│      │    Splitting module   │           │
│      └───────────────────────┘           │
│                   │          ┌─ 803      │
│      ┌───────────────────────┐           │
│      │  Decompression module │           │
│      └───────────────────────┘           │
│                   │          ┌─ 804      │
│      ┌───────────────────────┐           │
│      │   Combining module    │           │
│      └───────────────────────┘           │
│                                          │
└─────────────────────────────────────────┘
```

FIG. 8

900

Transmit end device

902

Processor

904

Bus system

901

Transceiver

903

Memory

FIG. 9

1000

Receive end device

1002

Processor

1004

Bus system

1001

Transceiver

1003

Memory

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013166766 A1

**Non-patent literature cited in the description**

- **LIANG LIU et al.** Optimized Uplink Transmission in Multi-Antenna C-RAN With Spatial Compression and Forward. *IEEE TRANSACTIONS ON SIGNAL PROCESSING., US,* 28 April 2015, vol. 63 (19), 5083-5095

- Space-time fronthaul compression of complex baseband uplink LTE signals. **CHOI JINSEOK et al.** 2016 IEEE INTERNATIONAL CONFERENCE ON COMMUNICATIONS (ICC). IEEE, 22 May 2016, 1-6